# EUROPÄISCHE PATENTSCHRIFT

(11) **EP 4 021 177 B1**
(45) Veröffentlichungstag und Bekanntmachung des Hinweises auf die Patenterteilung: **14.10.2026**
(21) Anmeldenummer: 20754213.5
(22) Anmeldetag: 06.08.2020
(51) Int. Cl.: A01M 7/00

(54) **LANDWIRTSCHAFTLICHES GERÄT MIT VERBESSERTER AUFHÄNGUNG**
AGRICULTURAL MACHINE WITH IMPROVED SUSPENSION
MACHINE AGRICOLE AVEC SUSPENSION AMÉLIORÉE

(30) Priorität: 29.08.2019 DE 102019123190
(43) Veröffentlichungstag der Anmeldung: 06.07.2022
(73) Patentinhaber: Amazonen-Werke H. Dreyer SE & Co. KG, 49205 Hasbergen (DE)
(72) Erfinder: OBERHEIDE, Friedrich, 49143 Bissendorf (DE); BORCHERT, Anna-Gret, 49090 Osnabrück (DE); GROSSE PRUES, Frank, 49593 Bersenbrück (DE); AUSTERMANN, Stefan, 48291 Telgte (DE)
(86) Internationale Anmeldenummer: PCT/EP2020/072134
(87) Internationale Veröffentlichungsnummer: WO 2021/037517

(56) Entgegenhaltungen:
- EP-A1- 2 311 318
- EP-A1- 2 829 177
- WO-A1-2010/100542

## Beschreibung

Die Erfindung betrifft ein landwirtschaftliches Gerät. Ferner betrifft die Erfindung ein Verfahren zur Steuerung und/oder Regelung eines landwirtschaftlichen Geräts.

Es sind vielfältige landwirtschaftliche Geräte zum Ausbringen von Material, wie Düngemittel, Pflanzenschutzmittel oder Saatgut bekannt, beispielsweise Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 50 m aufweisen. Dabei soll im Betrieb der Abstand zwischen dem Verteilergestänge und dem Boden über die gesamte Arbeitsbreite des Verteilergestänges möglichst konstant bleiben. Das bedeutet, dass das Verteilergestänge, auch bei Unebenheiten im zu bearbeitenden Boden, möglichst parallel zum zu bearbeitenden Boden gehalten wird. Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Kontakt mit dem Boden und/oder Pflanzenbestand kommen und beschädigt werden. Zusätzlich ist die homogene Verteilung des auszubringenden Materials, aufgrund der geneigten Stellung des Verteilergestänges zum Boden, und damit eines größeren oder kleineren Abstandes zwischen dem Boden und einzelnen Düsen, nicht mehr gegeben.

Im Betrieb eines landwirtschaftlichen Gerätes mit einer derartig großen Arbeitsbreite kann es beispielsweise aufgrund des Überfahrens von Unebenheiten im Boden, Beschleunigungen oder dem Abbremsen des Geräts oder eines, das Gerät ziehenden oder tragenden, Nutzfahrzeuges zu Schwingungen des Verteilergestänges in oder entgegengesetzt zur Fahrtrichtung kommen. Aufgrund derartiger Schwingungen können sehr hohe Kräfte am Verteilergestänge auftreten und eine homogene Materialausbringung kann nicht mehr garantiert werden. Es ist daher beispielhaft aus der EP 2 829 177 B1 bekannt, Stell- und/oder Dämpfungsmittel zwischen dem Mittelteil und den Auslegern, bzw. zwischen den Gestängeabschnitten derart anzuordnen, dass das Verteilergestänge einerseits von einer Transportstellung in eine Arbeitsstellung und umgekehrt überführbar ist und andererseits eine Dämpfung von am Verteilergestänge in Fahrtrichtung auftretenden Schwingungen erfolgen kann. Die Stell- und/oder Dämpfungsmittel können beispielsweise als hydraulisch arbeitende Zylinder ausgebildet sein. Infolge von Schwingungen des Verteilergestänges entstehen hierbei Druckunterschiede in den hydraulischen Zylindern.

Ein weiteres beispielhaftes landwirtschaftliches Gerät ist aus der EP 2 311 318 A1 bekannt.

Es hat sich nun gezeigt, dass bekannte Dämpfungssysteme bei Fahrzuständen, bei denen es zwangsläufig notwendig ist, Kräfte von dem Gerät in das Verteilergestänge zu übertragen, wie bei starkem Beschleunigen oder Bremsen des Geräts, oder bei Kurvenfahrt, unzuverlässig arbeiten.

Der Erfindung liegt daher die Aufgabe zugrunde, ein landwirtschaftliches Gerät anzugeben, bei dem eine verbesserte Dämpfung von auftretenden Schwingungen in oder entgegengesetzt zur Fahrtrichtung erfolgen kann.

Diese Aufgabe wird gelöst durch ein landwirtschaftliches Gerät gemäß Anspruch 1 und ein Verfahren nach Anspruch 11. Bevorzugte Ausführungsformen sind in den abhängigen Ansprüchen beschrieben.

Das landwirtschaftliche Gerät kann insbesondere eine Feldspritze sein. Die Feldspritze kann selbstfahrend sein. Sie kann auch eine gezogene, getragene, angebaute oder aufgebaute Feldspritze sein.

Im Folgenden bezeichnen die Begriffe "horizontale Achse/Richtung" und "vertikale Achse/Richtung", sofern nicht anders explizit angegeben, jeweils eine Achse/Richtung die in Fahrtrichtung des landwirtschaftlichen Geräts zeigt bzw. eine Achse/Richtung, die senkrecht zur Fahrtrichtung des landwirtschaftlichen Geräts und senkrecht zum Boden steht.

Weiterhin ist im Folgenden unter dem An- und Abwinkeln eines Auslegers eine Drehbewegung des Auslegers um eine horizontale Drehachse, insbesondere die horizontale Drehachse des jeweilige Zwischenrahmens, zu verstehen. Mit anderen Worten bewirkt ein An- bzw. Abwinkeln eine Änderung des Winkels des jeweiligen Auslegers gegenüber der Horizontalen. Dabei bewegt sich der jeweilige Ausleger beim Anwinkeln vom Boden weg und beim Abwinkeln zum Boden hin. Ein Verkippen des Verteilergestänges bezeichnet dementsprechend ein Anwinkeln eines Auslegers bei entsprechenden Abwinkeln des anderen Auslegers. Die Bewegung eines oder beider Ausleger um die jeweilige horizontale Drehachse wird im Folgenden auch als Neigungsbewegung, die entsprechende Stellung auch als Neigung bezeichnet. Erfindungsgemäß umfasst das Verteilergestänge des landwirtschaftlichen Geräts einen drehfest am landwirtschaftlichen Gerät befestigten Mittelteil und zwei am Mitteilteil über Gelenke verbundene Zwischenrahmen. Die Verbindung der Zwischenrahmen mit dem Mittelteil ist derart gestaltet, dass die Zwischenrahmen jeweils um mindestens eine horizontale Drehachse beweglich sind. Weiterhin sind die Zwischenrahmen jeweils um eine vertikale Drehachse beweglich.

Die seitlichen Ausleger des Verteilergestänges sind jeweils mit einem der beiden Zwischenrahmen verbunden. Insbesondere ist die Verbindung der Ausleger mit den Zwischenrahmen derart gestaltet, dass eine Bewegung des Zwischenrahmens, insbesondere eine Drehbewegung um eine horizontale Achse, auf den jeweiligen Auslegers übertragen wird.

Weiterhin umfasst das landwirtschaftliche Gerät eine Dämpfungsanordnung zur Dämpfung von Bewegungen des ersten Auslegers und des zweiten Auslegers in Fahrtrichtung des landwirtschaftlichen Geräts. Durch die Dämpfung solcher Bewegungen, die beispielsweise aufgrund der Trägheit der Ausleger bei Kurvenfahrten des landwirtschaftlichen Geräts auftreten können, werden die Kräfte, die auf den Mittelteil übertragen werden, verringert. Auf der anderen Seite unterdrückt die Dämpfungseinrichtung auch die Übertragung von Bewegungen des landwirtschaftlichen Geräts auf die jeweiligen Ausleger. Mit anderen Worten trägt die Dämpfungseinrichtung dazu bei, die Bewegungen der jeweiligen Ausleger von denen des landwirtschaftlichen Geräts und umgekehrt zu entkoppeln.

Die Dämpfungsanordnung kann die Zwischenrahmen unabhängig von dem Mittelteil miteinander verbinden. Damit ist insbesondere gemeint, dass die Dämpfungsanordnung dazu ausgebildet ist, eine Drehbewegung eines Auslegers um eine vertikale Achse gedämpft auf den anderen Ausleger zu übertragen. So kann vermieden werden, dass Drehmomente, die beispielsweise von Schwingungen des Verteilergestänges in bzw. entgegen der Fahrtrichtung herrühren, auf den Mittelteil und damit auf das landwirtschaftliche Gerät übertragen werden. Gleichzeitig kann damit eine Dämpfung solcher Schwingungen des Verteilergestänges erreicht werden.

Alternativ kann die Dämpfungsanordnung die jeweiligen Zwischenrahmen mit dem Mitteilteil verbinden. Dies kann beispielsweise durch zwei individuelle Dämpfungselemente realisiert werden, die jeweils einen Zwischenrahmen mit dem Mitteilteil verbinden. Eine solche Ausführungsform kann insbesondere bei einer aktiven Dämpfungsregelung, wie sie weiter unten beschrieben wird, vorteilhaft sein, da hier gezielt Einfluss auf die jeweiligen Ausleger genommen werden kann. Bei geeigneter aktiver Dämpfungsregelung kann bei dieser Ausführungsform eine Kraftübertragung von dem jeweiligen Ausleger auf den Mittelteil weitestgehend unterdrückt werden.

Die Dämpfungsanordnung kann mindestens ein hydraulisches Dämpfungselement, insbesondere einen Hydraulikzylinder, umfassen.

Die Dämpfungsanordnung kann weiterhin mindestens ein hydraulisches Ventil, insbesondere ein proportionales Wegeventil, umfassen, welches dem mindestens einem hydraulischen Dämpfungselement zugeordnet ist. Mittels eines solchen Ventils kann die "Federkonstante" des hydraulischen Dämpfungselements durch den am Dämpfungselement eingestellten Druck reguliert werden. Weiterhin kann so eine aktive Dämpfungsregelung erreicht werden.

Die hydraulischen Ventile können in Verbindung mit Drucksensoren als Druckregelventile zum Einhalten eines verbraucherseitigen Drucks, also eines Drucks an dem hydraulischen Dämpfungselement, in Abhängigkeit von einem elektrischen Steuersignal, insbesondere Steuerstrom, ausgebildet sein.

Das hydraulische Ventil kann beispielsweise ein direktgesteuertes und federbelastetes Dreiwegeventil beispielsweise in Schieberbauart sein. Im stromlosen Zustand bzw. ohne Steuersignal wird der Druck am Verbraucher zu einem hydraulischen Tank hin entlastet. Bei maximalem Steuersignal wird der maximal mögliche Druck (entweder der Druckversorgung oder der maximale Wert des hydraulischen Ventils) auf den Verbraucher eingeregelt.

Bei Anlegen eines Steuersignals wird der Federbelastung im Ventil elektromagnetisch entgegengewirkt und der Druck auf der Verbraucherseite dadurch entsprechend der Steuerkennlinie des Ventils konstant gehalten. Beispielsweise ist der eingestellte Druck dann proportional zum Steuersignal, das insbesondere ein Steuerstrom ist. Eine solche proportionale Steuerkennlinie ist jedoch nicht zwingend erforderlich und kann beispielsweise aus Kostengründen durch eine nichtproportionale Ansteuerung ersetzt werden. Hierfür können beliebige Steuerkennlinien in der Regeleinheit abgelegt sein, um Steuersignale passend zu einzelnen Solldruckwerten zu berechnen und auszugeben.

Die Ventile können insbesondere einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch die Stellvorrichtung aktiviert werden kann. Dies geschieht solange, bis der anliegende Druck dem Solldruck gemäß elektrischem Signal entspricht.

Generell beruht die Funktionsweise von Proportionaldruckregelventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionaldruckregelventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit.

Die hydraulischen Ventile können anhand einer bekannten Kennlinie elektronisch gesteuert auf einen Sollwert einstellbar sein. Die Kennlinien beschreiben beispielsweise den Zusammenhang zwischen einem auftretenden Druck und dem zugehörigen benötigten elektrischen Strom an einer Steuerspule des Ventils. Beispielhaft kann über die oben beschriebenen Drucksensoren ein einzustellender Sollwert der hydraulischen Ventile ermittelt werden, wodurch anhand der Kennlinie ein Steuerstrom auf die Ventile geschaltet wird, um den entsprechenden Druck einzustellen. Dies hat den Vorteil, dass über die Kennlinie der hydraulischen Ventile der Druck auf das Verteilergestänge präzise an einen Sollwert angepasst werden kann.

Alternativ oder zusätzlich kann das Dämpfungselement ein oder mehrere mechanische Federelemente umfassen. Beispielsweise kann das Dämpfungselement Gummipuffer umfassen. Es ist auch möglich, dass die hydraulischen Dämpfungselemente ein zusätzliches mechanisches Federelement umfassen. Mittels solcher Federelemente kann erreicht werden, dass auf die hydraulischen Dämpfungselemente eine Rückstellkraft ausgeübt wird, wenn Kräfte, insbesondere dynamische Kräfte, auf die hydraulischen Dämpfungselemente wirken. Unter dynamischen Kräften sind hierbei Kräfte zu verstehen, die ihre Ursache in Bewegungen des landwirtschaftlichen Geräts und/oder der jeweiligen Ausleger haben. Ein Auftreten solcher dynamischen Kräfte führt zu einer Bewegung eines beweglichen Elements, beispielsweise eines Kolbens, des hydraulischen Dämpfungselements. Das Federelement kann so angeordnet sein, dass es verformt, insbesondere komprimiert oder gedehnt, wird wenn sich das bewegliche Element des hydraulischen Dämpfungselements verschiebt. Das Federelement kann dann eine entsprechende Rückstellkraft auf das bewegliche Element ausüben, welche der Bewegung entgegengesetzt ist. Weiterhin ist es auch möglich, dass durch solche mechanischen Federelemente eine zusätzliche passive Dämpfung der Bewegung erreicht werden kann.

Das landwirtschaftliche Gerät kann eine Sensoreinrichtung umfassen, die dazu konfiguriert ist, Schwingungen der jeweiligen Ausleger um eine vertikale Achse zu erfassen. In diesem Fall ist es möglich, auf die detektierten Schwingungen mit einer Ansteuerung des dem mindestens einen hydraulischen Dämpfungselement zugeordneten hydraulischen Ventils zu reagieren, und so die Schwingungen aktiv zu dämpfen. Die Sensoreinrichtung kann dazu einen oder mehrere Sensoren umfassen.

Die Sensoreinrichtung kann einen oder mehrere Drucksensoren umfassen, wobei die Drucksensoren dazu konfiguriert sind, einen Druck oder eine Druckänderung in dem hydraulischen Dämpfungselement zu erfassen. Die Kraft, die durch eine Bewegung eines Auslegers um die jeweilige vertikale Drehachse auf das mindestens eine hydraulische Dämpfungselement ausgeübt wird, äußert sich in einer Druckänderung im Inneren des hydraulischen Dämpfungselements. Damit können über die Druckmessung an dem hydraulischen Dämpfungselement Schwingungen eines Auslegers in und entgegen der Fahrtrichtung des landwirtschaftlichen Geräts erfasst werden.

Die Drucksensoren können dabei als Drucksensor zur direkten Druckmessung, insbesondere als Druckmessumformer, ausgebildet sein. Eine solche Ausbildung hat den Vorteil, dass hierdurch sowohl ein Relativdruck, als auch ein Absolutdruck ermittelt werden können. Weiterhin können die Drucksensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung kann elektronisch gemessen, als analoges oder digitales Ausgangssignal ausgegeben und beispielsweise an die Regeleinheit übermittelt werden.

Es ist auch möglich, dass das landwirtschaftliche Gerät hydraulische Stellvorrichtungen umfasst, mittels derer die Ausleger um eine vertikale Drehachse bewegt werden können. Insbesondere können diese hydraulischen Stellvorrichtungen dazu ausgebildet sein, die jeweiligen Ausleger von einer Transport- in eine Arbeitsteilung zu überführen, und umgekehrt. In diesem Fall kann die Sensoreinrichtung auch zusätzlich oder alternative Drucksensoren umfassen, die einen Druck an diesen hydraulischen Stellvorrichtungen erfassen. Analog zu der Druckmessung an dem hydraulischen Dämpfungselement können so auftretende Schwingungen in und entgegen der Fahrtrichtung bestimmt werden.

Alternativ oder zusätzlich kann die Sensoreinrichtung Beschleunigungs- und/oder Bewegungssensoren umfassen, wobei die Beschleunigungs- und/oder Bewegungssensoren an den jeweiligen Auslegern angeordnet sind. Mittels solcher Sensoren können Bewegungen der Ausleger direkt erfasst werden.

Das landwirtschaftliche Gerät kann weiterhin eine Regeleinheit umfassen, die dazu konfiguriert ist, die Werte der Sensoreinrichtung zu verarbeiten und das mindestens eine hydraulische Ventil basierend auf den verarbeiteten Sensorwerten anzusteuern, so dass eine erfasste Schwingung aktiv gedämpft wird. Insbesondere kann die Regeleinheit dazu konfiguriert sein, die Werte der Sensoreinrichtung mittels eines Reglers, insbesondere eines PID-Reglers (proportional-integralderivative - Reglers), zu verarbeiten und das mindestens eine hydraulische Ventil basierend auf der Ausgabe des Reglers zu anzusteuern. Mit anderen Worten kann die Regeleinheit dazu konfiguriert sein, das mindestens eine hydraulische Ventil so zu steuern, dass ein Solldruck an dem hydraulischen Dämpfungselement herrscht. Falls die Dämpfungsanordnung eine Vielzahl von hydraulischen Dämpfungselementen umfasst, kann die Regeleinrichtung dazu konfiguriert sein, die jeweiligen hydraulischen Ventile basierend auf den Werten der Sensoreinrichtung so anzusteuern, dass jeweils ein Solldruck an den jeweiligen hydraulischen Dämpfungselementen herrscht, wobei die jeweiligen Solldrücke auch unterschiedlich voneinander sein können.

Das hydraulische Dämpfungselement kann mindestens zwei hydraulische Kammern umfassen, wobei jeder hydraulischen Kammer ein hydraulisches Ventil zugeordnet ist. Damit kann der hydraulische Druck in jeder Kammer individuell eingestellt werden. Somit kann eine präzise aktive Schwingungsdämpfung erreicht werden.

Weiterhin kann mindestens eine hydraulische Kammer des hydraulischen Dämpfungselements ein mechanisches Federelement umfassen. Wie weiter oben beschrieben, kann das Federelement bei Bewegung der jeweiligen Ausleger eine Rückstellkraft auf die jeweilige hydraulische Kammer ausüben. Im Falle von auftretenden Schwingungen kann dann schon mit kleinen Anpassungen des Drucks in der Kammer eine effektive Schwingungsdämpfung erreicht werden.

Das landwirtschaftliche Gerät kann mindestens zwei hydraulische Stellvorrichtungen umfassen, wobei eine erste hydraulische Stellvorrichtung den Mittelteil mit einem ersten der beiden Zwischenrahmen verbindet, so dass der entsprechende erste Ausleger mittels der ersten hydraulischen Stellvorrichtung um eine erste horizontale Achse bewegt werden kann. Mittels einer zweiten hydraulischen Stellvorrichtung kann der zweite Ausleger um eine zweite horizontale Achse bewegt werden.

Dadurch, dass die beiden Ausleger getrennt über die jeweiligen Zwischenrahmen drehbar am drehfesten Mittelteil befestigt sind, wobei mindestens zwei hydraulische Stellvorrichtungen zur Neigungseinstellung der Zwischenrahmen vorgesehen sind, kann eine verbesserte und vereinfachte Neigungskontrolle der jeweiligen Ausleger erreicht werden. Neigungsänderungen am Verteilergestänge können bei dem erfindungsgemäßen landwirtschaftlichen Gerät damit, anders als bei den oben beschriebenen bekannten landwirtschaftlichen Geräten, über die direkte Kontrolle der Ausleger erreicht werden.

Der Mittelteil weist erfindungsgemäß in seinem unteren Bereich einen Querrahmen auf. Der erste und der zweite Zwischenrahmen sind nach oben gerichtet auf dem Querrahmen angeordnet. Dabei sind die erste und zweite horizontale Drehachse im unteren Bereich des ersten und zweiten Zwischenrahmens angeordnet. Mit anderen Worten können die jeweiligen horizontalen Drehachsen bei dieser Anordnung in vertikaler Richtung nahe an den Spritzdüsen des Gestänges liegen. Um eine Abdeckung der gesamten Arbeitsbreite des landwirtschaftlichen Geräts zu erreichen, sind Spritzdüsen sowohl an den jeweiligen Auslegern als auch am Mittelteil vorgesehen. Da durch das Anwinkeln eines Auslegers ein Spalt zwischen dem Ausleger und dem Mittelteil entsteht, vergrößert sich der Abstand zwischen den am jeweiligen Ausleger angeordneten Spritzdüsen und den am Mittelteil vorgesehenen Spritzdüsen. Damit ergibt sich ein Bereich des überfahrenen Bodens der nicht oder nur unzureichend von den Spritzdüsen abgedeckt werden kann. Durch die Anordnung der horizontalen Drehachse im unteren Bereich des Verteilergestänges kann erreicht werden, dass dieser Spalt möglichst klein gehalten wird.

Die erste hydraulische Stellvorrichtung kann mit dem ersten Zwischenrahmen im oberen Bereich des ersten Zwischenrahmens und mit dem Mittelteil im unteren Bereich, insbesondere mit dem Querrahmen und beabstandet von dem ersten Zwischenrahmen, verbunden sein. Durch eine solche Anordnung kann erreicht werden, dass die beiden Angriffspunkte der ersten Stellvorrichtung jeweils einen möglichst großen Abstand zu der ersten Drehachse aufweisen. Damit kann eine vorteilhafte Kraftübertragung der ersten Stellvorrichtung auf den ersten Zwischenrahmen erreicht werden.

Die erste und die zweite Stellvorrichtung können als Hydraulikzylinder, insbesondere als doppeltwirkender Hydraulikzylinder ausgebildet sein. Derartige Zylinder bilden kostengünstige und einfache Mittel zur Steuerung der Lage des Verteilergestänges. Die doppeltwirkenden Hydraulikzylinder können beispielsweise jeweils mit einem Kolben ausgebildet sein, welcher beidseitig mit Druck beaufschlagbar ist.

Den hydraulischen Vorrichtungen können weiterhin ein oder mehrere Drucksensoren zugeordnet sein. Durch Bewegungen eines Auslegers und des zugehörigen Zwischenrahmens können entsprechende Kräfte auf die jeweilige hydraulische Stellvorrichtung übertragen werden, die sich wiederum in Druckänderungen in der hydraulischen Stellvorrichtung niederschlagen können. Diese Druckänderungen können mittels der erwähnten Drucksensoren erfasst werden. Weiterhin kann ein an der hydraulischen Stellvorrichtung herrschender Druck auch einer Neigungsstellung eines Auslegers entsprechen. In diesem Fall kann mit den Drucksensoren auch die Neigung eines jeweiligen Auslegers überwacht werden.

Den ersten und zweiten hydraulischen Stellvorrichtungen können jeweils entsprechende hydraulische Ventile zugeordnet sein. Die hydraulischen Ventile können dabei wie weiter oben beschrieben ausgebildet sein.

Weiterhin kann der ersten Stellvorrichtung und der zweiten Stellvorrichtung jeweils ein dem jeweiligen hydraulischen Ventil zugeordnetes Sperrventil zugeordnet sein. Mit einem solchen Sperrventil kann insbesondere das Abfließen von hydraulischer Flüssigkeit aus der jeweiligen Stellvorrichtung verhindert werden. Damit können die jeweiligen Ausleger in einer gewünschten Lage verriegelt werden. Dies kann beispielsweise bei Situationen wie dem Straßentransport oder beim Ein- und Ausklappen des Verteilergestänges, in denen das Verteilergestänge über die Stellvorrichtung starr mit dem landwirtschaftlichen Gerät verbunden sein soll, wünschenswert sein.

Die hydraulischen Stellvorrichtungen können weiterhin über die jeweiligen hydraulischen Ventile mit einem Hydraulikkreislauf verbunden sein. Der Hydraulikkreislauf kann ein offener Kreislauf sein, der beispielsweise eine Pumpe und einen Hydrauliktank umfasst.

Die jeweiligen Ausleger können mehrteilig ausgebildet sein. Sie können klappbare Segmente umfassen, die um eine senkrecht zur Fahrrichtung verlaufende Achse bewegt werden können. Die Ausleger können weiterhin segmentweise ein- und ausgeklappt werden. Dabei können sie auch Zwischenstellungen einnehmen. Damit ist es möglich, die Arbeitsbreite des landwirtschaftlichen Geräts anzupassen, indem eine bestimmte Anzahl von Segmenten ausgeklappt wird. Dies kann insbesondere für einen Ausleger unabhängig von dem anderen Ausleger geschehen. An zwischen den klappbaren Segmenten liegenden Gelenken können jeweils Sensoren, insbesondere Potentiometer, zur Ermittlung der Klappzustände angebracht sein. Diese Sensoren können sowohl vollständig eingeklappte / ausgeklappte Segmente als auch Zwischenstellungen an den Gelenken zwischen benachbarten Segmenten feststellen sowie den jeweiligen Klappzustand an die Regeleinheit übermitteln. Zudem ist es mittels der beschriebenen Segmentierung möglich, die Ausleger kompakt, beispielsweise in eine Transportposition, einzuklappen.

Die zweite hydraulische Stellvorrichtung kann die Zwischenrahmen, insbesondere im oberen Bereich der Zwischenrahmen, miteinander verbinden. Bei dieser Ausführungsform kann die Neigungskontrolle der jeweiligen Ausleger über ein Zusammenwirken der beiden hydraulischen Stellvorrichtungen erreicht werden. Beispielsweise kann durch das Aus- bzw. Einfahren des Kolbens der ersten Stellvorrichtung ein Ab- bzw. Anwinkeln des ersten Auslegers erfolgen. Da bei dieser Ausführungsform die beiden Zwischenrahmen über die zweite Stellvorrichtung gekoppelt sind, kann sich die resultierende Bewegung des ersten Zwischenrahmens auf den zweiten Zwischenrahmen übertragen. Je nach gewünschter Lage des zweiten Auslegers, kann auch ein Ein- oder Ausfahren des Kolbens der zweiten Stellvorrichtung erfolgen.

Soll beispielsweise nur der erste Ausleger angewinkelt werden, so kann bei dieser Ausführungsform der Kolben der ersten Stellvorrichtung eingefahren werden. Um zu verhindern, dass die resultierende Bewegung des ersten Zwischenrahmens auf den zweiten Zwischenrahmen übertragen wird, kann der Kolben der zweiten Stellvorrichtung ebenfalls eingefahren werden. Dies kann beispielsweise durch eine aktive Ansteuerung der zweiten Stellvorrichtung geschehen.

Soll beispielsweise nur der zweite Ausleger angewinkelt werden, so kann bei dieser Ausführungsform der Kolben der zweiten Stellvorrichtung eingefahren werden. Die Kolbenposition der ersten Stellvorrichtung kann hingegen beibehalten werden. Dies kann beispielsweise durch aktive Ansteuerung der ersten Stellvorrichtung erfolgen, aber auch durch ein Verriegeln der ersten Stellvorrichtung, beispielsweise über ein Sperrventil. In diesem Fall wird also der erste Zwischenrahmen mittels der ersten Stellvorrichtung fixiert.

Soll beispielsweise das gesamte Verteilergestänge verkippt werden, so kann bei dieser Ausführungsform der Kolben der ersten Stellvorrichtung je nach gewünschter Kipp-Richtung ein- bzw. ausgefahren werden. Die Kolbenposition der zweiten Stellvorrichtung kann hingegen beibehalten werden. Dies kann beispielsweise durch aktive Ansteuerung der zweiten Stellvorrichtung erfolgen, aber auch durch ein Verriegeln der zweiten Stellvorrichtung, beispielsweise über ein Sperrventil. Dadurch kann die Bewegung des ersten Zwischenrahmens auf den zweiten Zwischenrahmen übertragen werden, und beide Ausleger können sich in die gleiche Richtung um ihre jeweiligen Drehachsen bewegen. Dies führt zu einem Anwinkeln eines der Ausleger und zu einem entsprechenden Abwinkeln des anderen Auslegers, und damit zu einem Verkippen des Gestänges.

Diese Ausführungsform erlaubt daher eine flexible und einfache Neigungskontrolle des gesamten Verteilergestänges. Es versteht sich, dass durch entsprechende Steuerung der jeweiligen Stellvorrichtungen beliebige Neigungsstellungen der Ausleger möglich sind.

Alternativ kann die zweite hydraulische Stellvorrichtung den zweiten der Zwischenrahmen mit dem Mittelteil verbinden. Bei dieser Ausführungsform kann die Neigungskontrolle des ersten und zweiten Auslegers unabhängig voneinander erfolgen. Dabei kann die erste Stellvorrichtung für die Neigungskontrolle des ersten Auslegers, und die zweite Stellvorrichtung für die Neigungskontrolle des zweiten Auslegers verantwortlich sein. Beispielsweise kann durch das Aus- bzw. Einfahren des Kolbens der ersten Stellvorrichtung ein Ab- bzw. Anwinkeln des ersten Auslegers erfolgen. Durch das Aus- bzw. Einfahren des Kolbens der zweiten Stellvorrichtung kann analog ein Ab- bzw. Anwinkeln des zweiten Auslegers erfolgen. Insbesondere können die hydraulischen Stellvorrichtungen so angeordnet sein, dass eine Bewegung des ersten Zwischenrahmens den zweiten Zwischenrahmen nicht beeinflusst, und umgekehrt.

Um beispielsweise den ersten Ausleger an- bzw. abzuwinkeln, kann bei dieser Ausführungsform der Kolben der ersten Stellvorrichtung ein- bzw. ausgefahren werden. Die zweite Stellvorrichtung und der zweite Zwischenrahmen können hierbei unverändert bleiben. Damit verändert auch der zweite Ausleger seine Position nicht. Analog hierzu kann zum An- bzw. Abwinkeln des zweiten Auslegers der Kolben der zweiten Stellvorrichtung ein- bzw. ausgefahren werden. Die erste Stellvorrichtung und der erste Zwischenrahmen können hierbei unverändert bleiben. Damit verändert auch der erste Ausleger seine Position nicht.

Diese Ausführungsform erlaubt damit eine einfache individuelle Neigungskontrolle der beiden Ausleger. Ein Verkippen des gesamten Verteilergestänges kann bei dieser Ausführungsform über das individuelle Anwinkeln eines und das gleichzeitige individuelle Abwinkeln des anderen Auslegers erreicht werden. Es versteht sich, dass durch entsprechende individuelle Ansteuerung der jeweiligen Stellvorrichtungen beliebige Neigungsstellungen der Ausleger möglich sind.

Die zweite hydraulische Stellvorrichtung kann bei dieser Ausführungsform mit dem zweiten Zwischenrahmen im oberen Bereich des zweiten Zwischenrahmens und mit dem Mittelteil im unteren Bereich, insbesondere mit dem Querrahmen und beabstandet von dem zweiten Zwischenrahmen, verbunden sein. Mit anderen Worten kann die zweite hydraulische Stellvorrichtung in vertikaler Richtung schräg zwischen dem zweiten Zwischenrahmen und dem Mittelteil angeordnet sein. Durch eine solche Anordnung kann erreicht werden, dass die beiden Angriffspunkte der zweiten Stellvorrichtung jeweils einen möglichst großen Abstand zu der zweiten Drehachse aufweisen. Damit kann eine vorteilhafte Kraftübertragung der zweiten Stellvorrichtung auf den zweiten Zwischenrahmen erreicht werden.

Die Zwischenrahmen können mit dem Mittelteil jeweils mittels eines Kugelgelenks verbunden sein. Eine solche Verbindung erlaubt auf einfache Art eine Bewegung der Zwischenrahmen sowohl um eine horizontale als auch eine vertikale Achse.

Das landwirtschaftliche Gerät kann weiterhin eine dritte hydraulische Stellvorrichtung umfassen, wobei die dritte hydraulische Stellvorrichtung einen ersten der Ausleger mit dem entsprechenden ersten Zwischenrahmen verbindet, wobei mittels der dritten hydraulischen Stellvorrichtung der erste Ausleger um eine erste vertikale Drehachse bewegt werden kann. Zudem kann das landwirtschaftliche Gerät eine vierte hydraulische Stellvorrichtung umfassen, wobei die vierte hydraulische Stellvorrichtung den zweiten der Ausleger mit dem entsprechenden zweiten Zwischenrahmen verbindet, wobei mittels der vierten hydraulischen Stellvorrichtung der zweite Ausleger um eine zweite vertikale Drehachse bewegt werden kann.

Die dritte und vierte hydraulische Stellvorrichtung können insbesondere dazu geeignet sein, die Ausleger des Verteilergestänges von einer Transport- in eine Arbeitsstellung zu überführen, und umgekehrt. Bei Feldspritzen wie den eingangs beschriebenen verbinden solche Stellvorrichtungen, auch als Klappzylinder bezeichnet, die jeweiligen Ausleger üblicherweise direkt mit einem Mittelteil des Gestänges. Dies hat den Nachteil, dass bei einer Neigungssteuerung eines Auslegers gegenüber dem Mittelteil immer auch die Klappzylinder angesteuert werden müssen. Dies kann durch die beschriebene Verbindung der Klappzylinder mit dem Zwischenrahmen und dem Ausleger vorteilhafterweise vermieden werden.

Die Erfindung stellt weiterhin ein Verfahren nach Anspruch 11 zur Steuerung eines oben beschriebenen landwirtschaftlichen Geräts zur Verfügung. Das Verfahren umfasst die folgenden Schritte:
- Erfassen von Sensorwerten durch die Sensoreinrichtung.
- Verarbeiten der Sensorwerte durch die Regeleinheit.
- Ansteuern des hydraulischen Ventils basierend auf den verarbeiteten Sensorwerten, so dass eine erfasste Schwingung durch das hydraulische Dämpfungselement aktiv gedämpft wird.

Weitere Merkmale und Vorteile der Erfindung werden nachfolgend anhand der beispielhaften Figuren erläutert. Dabei zeigt:
- Figuren 1a bis 1c: schematisch die Heckansicht eines landwirtschaftlichen Geräts;
- Figur 2: schematisch einen Detailausschnitt eines landwirtschaftlichen Geräts in perspektivischer Ansicht;
- Figur 3: schematisch die Heckansicht eines Detailausschnitts eines landwirtschaftlichen Geräts;
- Figuren 4a bis 4c: schematisch die Heckansicht eines Detailausschnitts eines landwirtschaftlichen Geräts;
- Figur 5: schematisch die Heckansicht eines Detailausschnitts eines landwirtschaftlichen Geräts; und
- Figuren 6a und 6b: schematisch die Draufsicht eines Detailausschnittes eines landwirtschaftlichen Geräts;
- Figuren 7a und 7b: schematisch die Frontalansicht eines Detailausschnittes eines landwirtschaftlichen Geräts;
- Figur 8: schematisch ein Dämpfungselement in perspektivischer Ansicht;
- Figuren 9a und 9b: schematisch ein Dämpfungselement;
- Figuren 10a und 10b: schematisch ein Dämpfungselement;
- Figur 11: schematisch ein Dämpfungselement; und
- Figur 12: schematisch ein mechanisches Dämpfungselement.

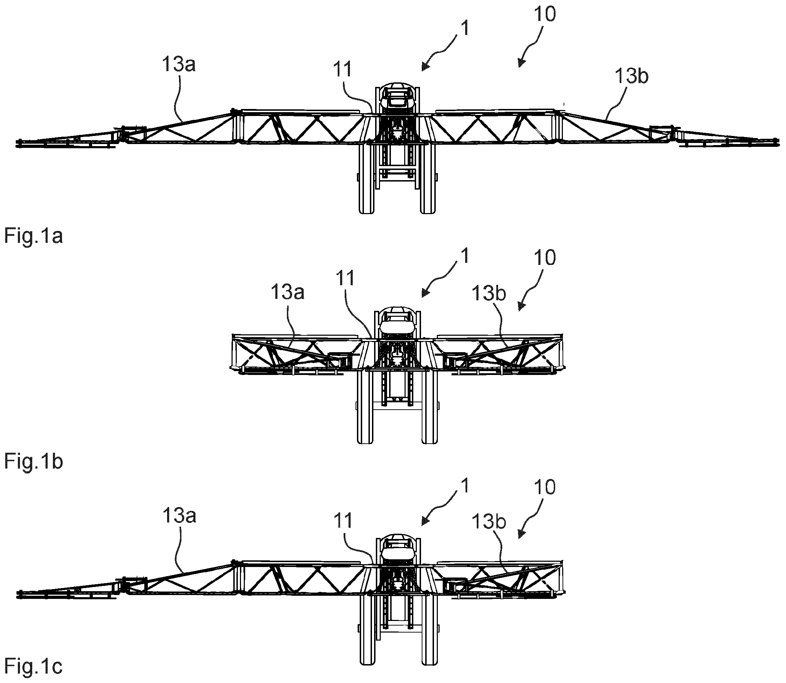

Figuren 1a bis 1c zeigen ein landwirtschaftliches Gerät 1, das als Feldspritze ausgebildet ist, in Heckansicht. Es ist zu erkennen, dass das Gerät 1 ein Verteilergestänge 10 mit einem Mittelteil 11 umfasst. Weiterhin besitzt das Verteilergestänge 10 zwei Ausleger 13 a und 13 b, die mit dem Mittelteil 11 durch Gelenke verbunden sind. Es ist weiterhin zu sehen, dass die Ausleger 13 a und 13 b jeweils mehrere Gestängeabschnitte aufweisen, die über klappbare Gelenke miteinander verbunden sind. Die einzelnen Gestängeabschnitte können dabei um eine vertikale Achse verklappt werden, so dass die Arbeitsbreite des landwirtschaftlichen Geräts angepasst werden kann. Die Gestängeabsschnitte können dabei für den jeweiligen Ausleger 13 a und 13 b unabhängig verklappt werden.

Figur 1a zeigt einen Zustand, in dem die Ausleger 13 a und 13 b vollständig ausgeklappt sind. Figur 1b zeigt einen Zustand, in dem jeweils nur innerste Gestängeabschnitt der Ausleger 13 a und 13 b ausgeklappt ist, während die restlichen Gestängeabschnitte eingeklappt sind. Figur 1c zeigt einen Zustand, in dem alle Gestängeabschnitte des Auslegers 13 a ausgeklappt sind, während nur der innerste Gestängeabschnitt des Auslegers 13 b ausgeklappt ist.

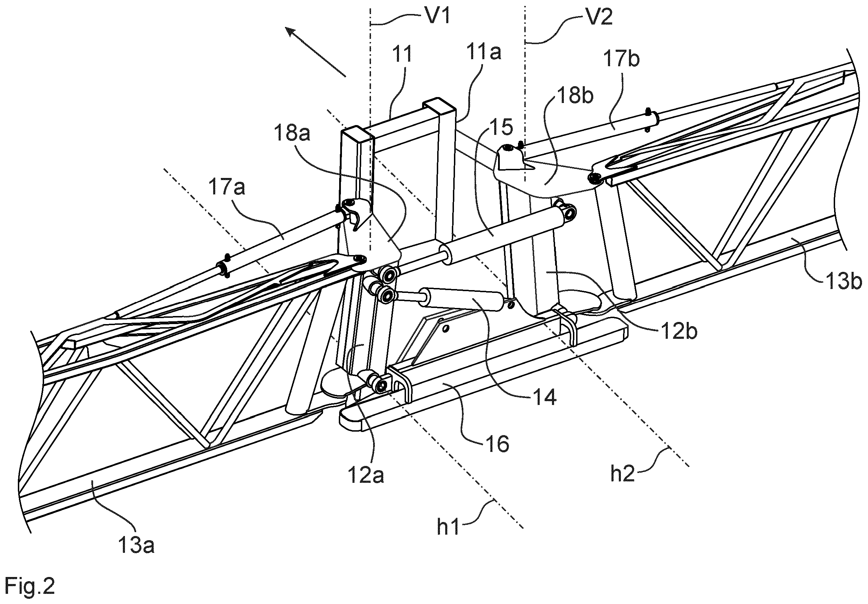

Figur 2 zeigt schematisch einen Detailausschnitt einer ersten Ausführungsform des landwirtschaftlichen Geräts 1. Dabei zeigt der Pfeil die Fahrtrichtung des landwirtschaftlichen Geräts 1 an. Es ist zu sehen, dass der Mittelteil 11 in seinem vorderen, also in Fahrtrichtung gelegenen, Bereich einen aufrecht stehenden, rechteckigen Rahmenteil 11 a aufweist. Der Rahmenteil 11 a kann beispielsweise verwendet werden, um den Mittelteil 11 drehfest mit dem landwirtschaftlichen Gerät 1 zu verbinden. Der Rahmenteil 11 a kann insbesondere auch höhenverstellbar mit dem landwirtschaftlichen Gerät 1 verbunden sein.

Weiterhin weist der Mittelteil 11 in seinem hinteren, unteren Bereich einen Querrahmen 16 auf. Auf dem Querrahmen 16 sind nach oben gerichtet zwei Zwischenrahmen 12 a und 12 b angeordnet. Dabei sind die Zwischenrahmen 12 a und 12 b mit dem Mittelteil 11 gelenkig verbunden, so dass sie jeweils um horizontale Drehachsen h1 und h2 und vertikale Drehachsen v1 und v2 beweglich sind. Die Verbindung der Zwischenrahmen 12 a und 12 b zum Querrahmen 16 kann beispielsweise über hier nicht gezeigte Kugelgelenke erfolgen, welche die beschriebenen Drehbewegungen ermöglichen. Die Zwischenrahmen 12 a und 12 b sind also so am Mittelteil 11 angeordnet, dass ihre jeweiligen horizontalen Drehachsen h1 und h2 im unteren Bereich des Verteilergestänges 10 verlaufen.

Figur 2 zeigt weiterhin, dass der Zwischenrahmen 12 a mittels einer ersten hydraulischen Stellvorrichtung 14 mit dem Mittelteil 11 verbunden ist. Dabei ist das eine Ende der hydraulischen Stellvorrichtung 14 mit dem Zwischenrahmen 12 a in seinem oberen Bereich verbunden. Das andere Ende der Stellvorrichtung 14 ist mit dem Mittelrahmen in seinem unteren Bereich verbunden, und zwar auf der dem Zwischenrahmen 12 b näherliegenden Seite. Mit anderen Worten ist die hydraulische Stellvorrichtung 14 schräg zwischen dem Zwischenrahmen 12 a und dem Mittelteil 11 angeordnet. Dabei liegen die jeweiligen Verbindungspunkte mit dem Zwischenrahmen 12 a und dem Mittelteil 11 beabstandet von der horizontalen Drehachse h1 des Zwischenrahmens 12 a. Dies ermöglicht eine vorteilhafte Kraftübertragung von der hydraulischen Stellvorrichtung auf den Zwischenrahmen 12 a, um eine Drehbewegung des Zwischenrahmens 12 a um seine horizontale Drehachse h1 zu erreichen.

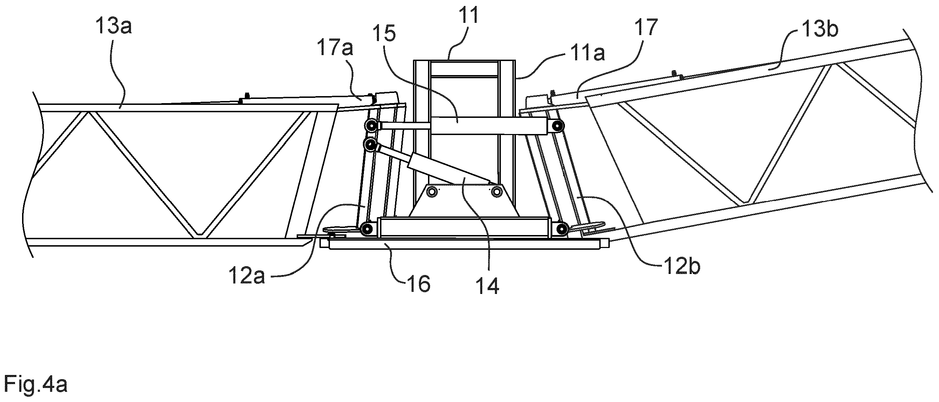

Es ist zudem zu sehen, dass der Zwischenrahmen 12 a und der Zwischenrahmen 12 b mittels einer zweiten hydraulischen Stellvorrichtung 15 miteinander verbunden sind. Die zweite hydraulische Stellvorrichtung 15 ist horizontal verlaufend im oberen Bereich der Zwischenrahmen 12 a und 12 b angerordnet. Durch eine entsprechende Ansteuerung der Stellvorrichtungen 14 und 15 kann eine Drehbewegung des Zwischenrahmens 12 b um seine horizontale Drehachse h2 erreicht werden. Dies wird weiter unten mit Bezug auf die Figuren 4a bis 4c detaillierter beschrieben.

Die Stellvorrichtungen 14 und 15 sind in der gezeigten Ausführungsform als Hydraulikzylinder 14 und 15 ausgebildet.

Figur 2 zeigt weiterhin, dass die Zwischenrahmen 12 a und 12 b an ihren oberen und unteren Enden jeweils mit den Auslegern 13 a und 13 b gelenkig verbunden sind. Dabei können sich die Ausleger 13 a und 13 b bezüglich der Zwischenrahmen 12 a und 12 b jeweils um eine vertikale Drehachse bewegen. Bezüglich horizontaler Drehungen sind die Ausleger 13 a und 13 b drehfest an den Zwischenrahmen 12 a und 12 b befestigt. Damit wird eine Drehbewegung der Zwischenrahmen 12 a und 12 b um ihre horizontalen Drehachsen h1 und h2 jeweils auf die Ausleger 13 a und 13 b übertragen. Mit anderen Worten können die Ausleger 13 a und 13 b mittels der hydraulischen Stellvorrichtungen 14 und 15 um die horizontalen Drehachsen h1 und h2 der Zwischenrahmen 12 a und 12 b bewegt werden. Damit kann die Neigung der Ausleger 13 a und 13 b mittels der Stellvorrichtungen 14 und 15 kontrolliert werden. Dies kann einerseits verwendet werden, um die Neigung der Ausleger 13 a und 13 b dem Boden anzupassen. Andererseits kann mittels einer geeigneten Kontrolle der Stellvorrichtungen 14 und 15 auch eine Dämpfung von Schwingungsbewegungen der Ausleger 13 a und 13 b in vertikaler Richtung erreicht werden. Es ist weiterhin möglich, die Bewegungen der Ausleger 13 a und 13 b über geeignete Ansteuerung der hydraulischen Stellvorrichtungen 14 und 15 von den Bewegungen des landwirtschaftlichen Geräts 1 weitestgehend zu entkoppeln.

Weiterhin ist in Figur 2 zu sehen, dass zwei hydraulische Stellvorrichtungen 17 a und 17 b jeweils die Ausleger 13 a,b mit den Zwischenrahmen 12 a,b verbinden. Durch die gelenkige Anordnung der Ausleger 13 a,b an den jeweiligen Zwischenrahmen 12 a,b ist es mittels der Stellvorrichtungen 17 a,b möglich, die Ausleger 13 a und 13 b um jeweilige vertikale Drehachsen zu bewegen. Insbesondere können die Stellvorrichtungen 17 a,b dazu verwendet werden, das Verteilergestänge 10 von einer Arbeits- in eine Transportposition zu überführen, oder umgekehrt. Es ist auch möglich, dass die Stellvorrichtungen 17 a,b kontrolliert werden, um Schwingungen der Ausleger 13 a,b in bzw. entgegen der Fahrtrichtung des landwirtschaftlichen Geräts 1 zu dämpfen.

Es ist weiterhin zu erkennen, dass die Zwischenrahmen 12 a,b an ihren jeweiligen oberen Enden jeweils eine gekrümmte Anlenkplatte 18 a,b aufweisen. Dabei ist jeweils ein äußeres Ende der Anlenkplatten 18 a,b mit der Stellvorrichtung 17 a,b verbunden, während das andere äußere Ende der Anlenkplatten 18 a,b mit dem Ausleger 13 a,b verbunden ist. Durch eine solche Ausgestaltung der Zwischenrahmen 12 a,b kann eine vorteilhafte Kraftübertragung zwischen den Zwischenrahmen 12 a,b und den Auslegern 13 a,b erreicht werden.

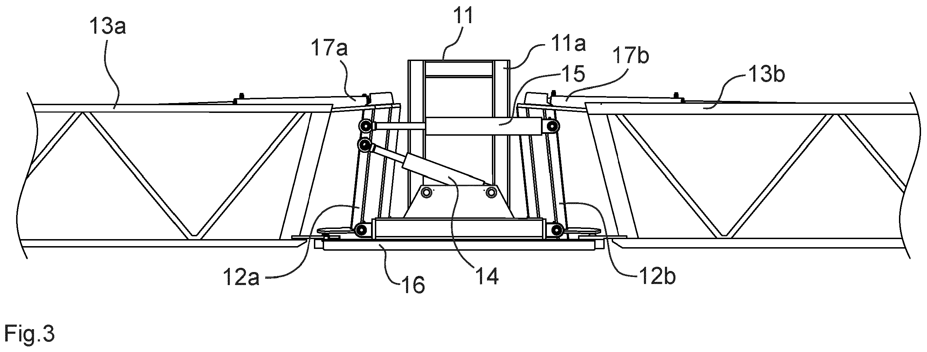

Figur 3 zeigt schematisch einen Detailausschnitt der in Figur 2 gezeigten ersten Ausführungsform des landwirtschaftlichen Geräts 1 in Heckansicht. Dabei zeigt Figur 3 einen Zustand des Verteilergestänges 10, bei dem beide Ausleger 13 a,b einen Winkel von 90° zur Vertikalen aufweisen. Dieser Zustand kann beispielsweise bei ebenem Boden einer normalen Arbeitsstellung des Verteilergestänges 10 entsprechen, bei der beide Ausleger 13 a,b parallel zum Boden geführt werden.

Demgegenüber sind in den Figuren 4a bis 4c in Heckansicht verschiedene Neigungszustände des Verteilergestänges 10 entsprechend der in Figur 2 gezeigten Ausführungsform gezeigt.

Figur 4a zeigt einen Neigungszustand des Verteilergestänges 10, bei dem der Ausleger 13 b angewinkelt ist, während der Ausleger 13 a einen Winkel von 90° zur Vertikalen aufweist. Es ist zu erkennen, dass die Stellvorrichtung 15, die die Zwischenrahmen 12 a und 12 b verbindet, gegenüber dem in Figur 3 gezeigten Zustand verkürzt ist, also der Kolben des Hydraulikzylinders 15 eingefahren worden ist. Demgegenüber ist die Länge der Stellvorrichtung 14 gegenüber dem in Figur 3 gezeigten Zustand unverändert. Beispielsweise kann der Kolben des Hydraulikzylinders 14 durch Schließen eines Sperrventils in seiner Position verriegelt worden sein. Es ist auch möglich, dass ein an dem Hydraulikzylinder 14 wirkender Druck dynamisch angepasst worden ist, um eine Bewegung des Zwischenrahmens 12 a zu verhindern. Jedenfalls ist der Ausleger 12 a gegenüber dem Mittelteil 11 fixiert, bewegt sich also nicht um seine horizontale Drehachse. Damit wirkt der Zwischenrahmen 12 a als starres Element, und durch die Verkürzung der Stellvorrichtung 15 wirkt eine Kraft auf den Zwischenrahmen 12 b, die ein Drehmoment um dessen horizontale Drehachse bewirkt. Dies führt wiederum zu einem Anwinkeln des Auslegers 13 b. Auf analoge Weise ergibt sich durch ein, nicht gezeigtes, Ausfahren des Kolbens des Hydraulikzylinders 15 bei Beibehalten der Kolbenposition des Hydraulikzylinders 14, ein Abwinkeln des Auslegers 13 b.

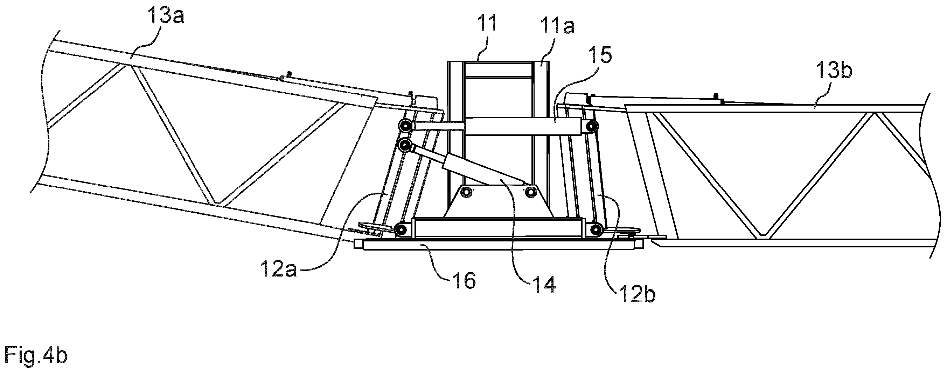

Figur 4b zeigt einen Neigungszustand des Verteilergestänges 10, bei dem der Ausleger 13 a angewinkelt ist, während der Ausleger 13 b einen Winkel von 90° zur Vertikalen aufweist. Es ist zu erkennen, dass die Stellvorrichtung 14, die den Zwischenrahmen 12 a mit dem Mittelteil 11 verbindet, gegenüber dem in Figur 3 gezeigten Zustand verkürzt ist, also der Kolben des Hydraulikzylinders 14 eingefahren wurde. Dadurch wirkt eine Kraft auf Zwischenrahmen 12 a, die in einem Drehmoment um dessen horizontale Drehachse resultiert. Dies führt wiederum zu einem Anwinkeln des Auslegers 13 a. Weiterhin ist zu erkennen, dass die Stellvorrichtung 15 ebenfalls gegenüber dem in Figur 3 gezeigten Zustand verkürzt worden ist, also der Kolben des Hydraulikzylinders 15 eingefahren wurde. Durch das Einfahren des Kolbens des Hydraulikzylinders 15 wird die Bewegung des Zwischenrahmens 12 a nicht auf den Zwischenrahmen 12 b übertragen. Auf analoge Weise ergibt sich durch ein, nicht gezeigtes, Ausfahren des Kolbens beider Hydraulikzylinder 14 und 15, ein Abwinkeln des Auslegers 13 a.

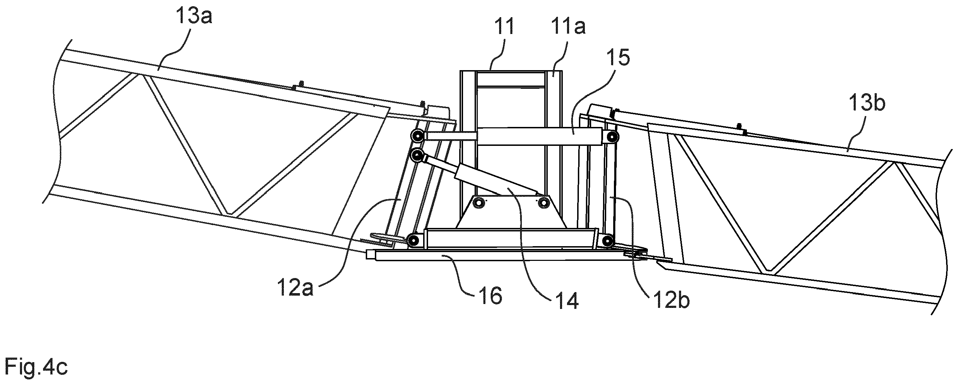

Figur 4c zeigt einen Neigungszustand des Verteilergestänges 10, bei dem der Ausleger 13 a angewinkelt und der Ausleger 13 b abgewinkelt ist. Mit anderen Worten ist das Verteilergestänge 10 in Fahrtrichtung gesehen im Uhrzeigersinn verkippt. Es ist zu sehen, dass die Stellvorrichtung 14 gegenüber dem in Figur 3 gezeigten Zustand verkürzt ist, also der Kolben des Hydraulikzylinders 14 eingefahren wurde. Wie oben mit Bezug auf Figur 4b beschrieben, führt dies zu einem Anwinkeln des Auslegers 13 a. Weiterhin ist zu erkennen, dass die Länge der Stellvorrichtung 15 gegenüber dem in Figur 3 gezeigten Zustand unverändert ist. Beispielsweise kann der Kolben des Hydraulikzylinders 15 durch Schließen eines Sperrventils in seiner Position verriegelt worden sein. Es ist auch möglich, dass ein an dem Hydraulikzylinder 15 wirkender Druck dynamisch angepasst worden ist, um die Lage des Kolbens konstant zu halten. Jedenfalls wirkt somit die Stellvorrichtung 15 als starres Element. Damit resultiert aus der Drehbewegung des Zwischenrahmens 12 a um seine horizontale Drehachse eine Kraft auf den Zwischenrahmen 12 b, die zu einer entsprechenden Drehbewegung des Zwischenrahmens 12 b um seine horizontale Drehachse führt. Damit erfolgt ein Abwinkeln des Auslegers 13 b.

Angesichts des eben Gesagten versteht es sich, dass es möglich ist, beliebige Neigungszustände der Ausleger 13 a und 13 b herzustellen, indem die hydraulischen Stellvorrichtungen 14 und 15, insbesondere die Kolbenposition der Hydraulikzylinder 14 und 15, entsprechend eingestellt werden. So ist es beispielsweise möglich, dass der Kolben des Hydraulikzylinders 14 eingefahren wird, um den Ausleger 13 a anzuwinkeln. Wenn gleichzeitig der Kolben des Hydraulikzylinders 15 stärker als in Figur 4b gezeigt eingefahren wird, so erfolgt auch ein Anwinkeln des Auslegers 13 b.

In den Figuren 4a bis 4c ist weiterhin zu erkennen, dass die Länge der Stellvorrichtungen 17 a,b, unabhängig vom Neigungszustand der Ausleger 13 a,b, nicht verändert werden muss, da die Neigung der Ausleger 13 a und 13 b direkt über die Neigung der Zwischenrahmen 12 a und 12 b kontrolliert wird, wobei die Stellvorrichtungen 17 a und 17 b die Zwischenrahmen 12 a und 12 b mit den Auslegern 13 a und 13 b verbinden. Damit entfällt die Notwendigkeit, die Stellvorrichtungen 17 a und 17 b bei der Neigungskontrolle der Ausleger 13 a und 13 b mitführen zu müssen.

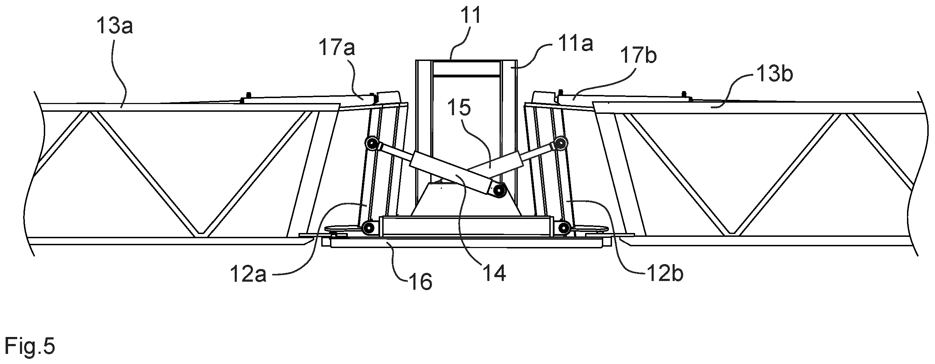

Figur 5 zeigt schematisch einen Detailausschnitt einer zweiten Ausführungsform des landwirtschaftlichen Geräts 1 in Heckansicht. Die gezeigte zweite Ausführungsform unterscheidet sich dabei von der in den Figuren 2 bis 4 gezeigten Ausführungsform dadurch, dass die zweite Stellvorrichtung 15 den Mittelteil 11 mit dem zweiten Zwischenrahmen 12 b verbindet. In der gezeigten Ausführungsform ist die Anordnung der zweiten Stellvorrichtung 15 symmetrisch zu der Anordnung der ersten Stellvorrichtung 14. Damit sind die Zwischenrahmen 12 a und 12 b bezüglich Drehbewegungen um ihre horizontalen Drehachsen voneinander entkoppelt. Ein An- bzw. Abwinkeln der Ausleger 13 a und 13 b erfolgt damit direkt über das Ein- bzw. Ausfahren der Kolben der Hydraulikzylinder 14 bzw. 15.

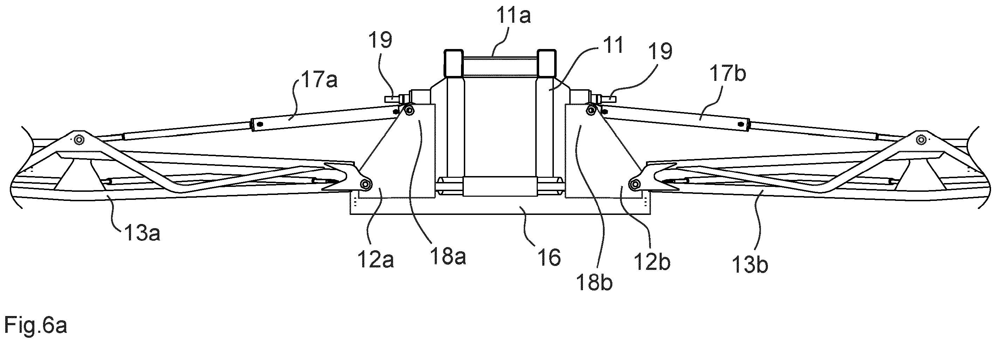

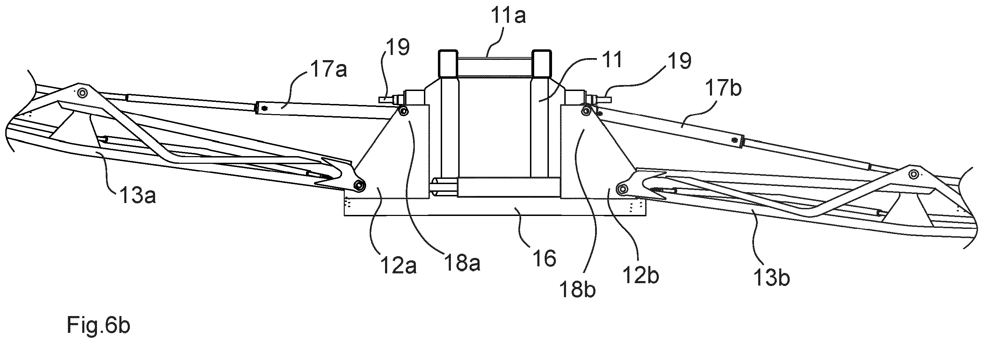

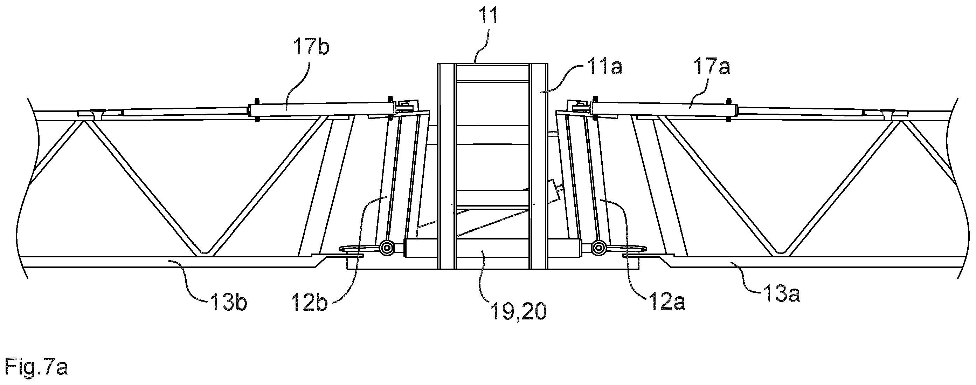

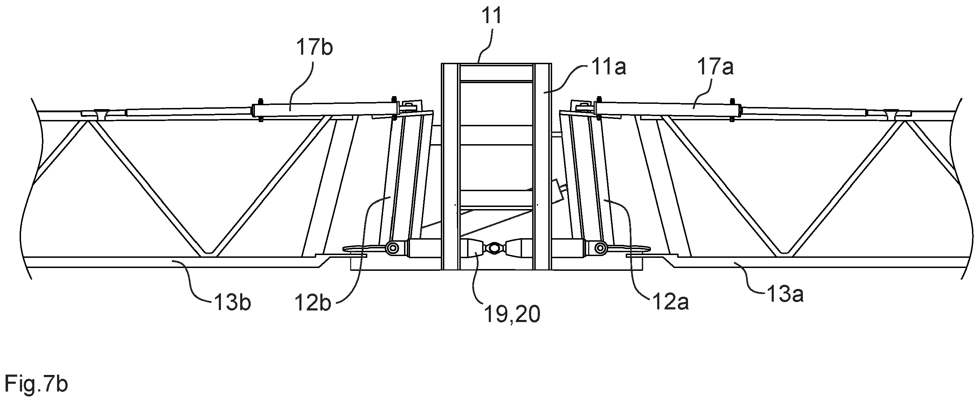

Figuren 6a und 6b zeigen schematisch einen Detailausschnitt des landwirtschaftlichen Geräts 1 in Draufsicht. Zusätzlich zu den weiter oben beschriebenen Elementen des Verteilergestänges ist eine Dämpfungsanordnung 19 zu sehen, welche in Fahrtrichtung vorne zwischen den Zwischenrahmen 12 a und 12 b angeordnet ist. Die Dämpfungsanordnung 19 kann ein oder mehrere Dämpfungselemente 20 umfassen. Die Dämpfungselemente 20 können beispielsweise einen oder mehrere, insbesondere hydraulische, Schubzylinder und/oder Gummielemente umfassen, wie in Figuren 7a und 7b näher gezeigt.

Dabei zeigt Figur 6a einen Zustand, bei dem beide Ausleger 13 a und 13 b einen Winkel von 90° zur Fahrtrichtung des landwirtschaftlichen Geräts 1 aufweisen. Demgegenüber zeigt Figur 6b einen Zustand, bei dem der Ausleger 13 a in Fahrtrichtung ausgelenkt ist, während der Ausleger 13 b entgegen der Fahrtrichtung ausgelenkt ist. Der in Figur 6b gezeigte Zustand kann beispielsweise aufgrund von durch Gierbewegungen des landwirtschaftlichen Geräts 1 ausgelösten Schwingungen des Verteilergestänges in Fahrtrichtung auftreten. Es ist zu sehen, wie die Schwingungsbewegung der Ausleger 13 a und 13 b durch die Stellvorrichtungen 17 a und 17 b und die gekrümmten Anlenkplatten 18 a,b in Drehbewegungen der Zwischenrahmen 12 a und 12 b umgesetzt wird. Es ist weiterhin zu erkennen, dass sich die Dämpfungsanordnung 19 in Figur 6b gegenüber dem in Figur 6a gezeigten Zustand horizontal verschoben hat. In dem gezeigten Fall sind die Zwischenrahmen 12 a und 12 b über die Dämpfungsanordnung 19 in horizontaler Richtung gekoppelt. Eine Bewegung in horizontaler Richtung wird gedämpft von einem Ausleger auf den anderen übertragen. Damit kann die Übertragung von Kräften, die aus solchen Schwingungen resultieren, auf den starren Mittelteil 11 und das landwirtschaftliche Gerät 1 reduziert werden.

Figuren 7a und 7b zeigen schematisch einen Detailausschnitt des landwirtschaftlichen Geräts 1 in Frontalansicht, also entgegen der Fahrtrichtung des landwirtschaftlichen Geräts gesehen.

In Figur 7a ist eine erste Ausführungsform der Dämpfungsanordnung 19 gezeigt, welche einen hydraulischen Zylinder 20 als Dämpfungselement umfasst. Bei einer Bewegung eines der Ausleger 13 a,b in bzw. entgegen der Fahrtrichtung des landwirtschaftlichen Geräts kann sich der Kolben des Schubzylinders 19 horizontal verschieben, und so die Bewegung auf den anderen Ausleger übertragen. Durch die Hydraulikflüssigkeit dämpft der Zylinder 20 gleichzeitig passiv diese Bewegung. Es ist auch möglich, dass ein Druck, der an den Kammern des Zylinder 20 anliegt, aktiv gesteuert wird, um eine aktive Dämpfung zu erreichen. Insbesondere ist es möglich, dass mittels Sensoren (nicht gezeigt) eine Schwingbewegung der Ausleger 13 a,b ermittelt werden kann. Diese Sensoren können beispielsweise Beschleunigungssensoren sein, die an den Auslegern 13 a,b angeordnet sind. Es ist aber auch möglich, Druckänderungen an den Kammern des Zylinder 20 und/oder Stellvorrichtungen 17 a und 17 b zu messen, um derartige Schwingungen zu ermitteln. Dann ist es möglich, den Druck in den Kammern des Zylinder 20 derart zu regulieren, dass die Schwingbewegung gedämpft wird.

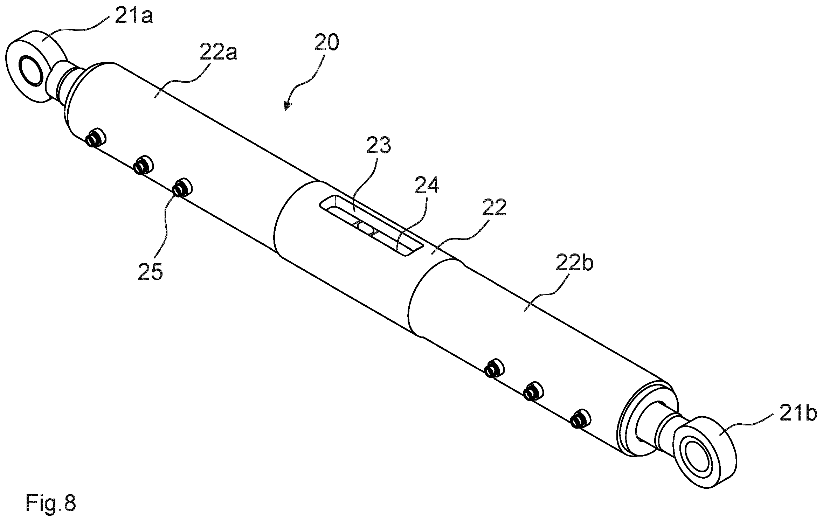

Es ist weiterhin möglich, dass der hydraulische Zylinder 20 mehrere Hydraulikkammern aufweist, wobei der hydraulische Druck in den jeweiligen Kammern individuell kontrolliert werden kann. Es ist weiterhin möglich, dass in den Hydraulikkammern zusätzliche mechanische Federelement angeordnet sind. Dadurch kann eine zusätzliche passive Dämpfungswirkung erreicht werden. Eine solche Ausführungsform wird mit Bezug auf die Figuren 8 bis 10 weiter unten im Detail beschrieben.

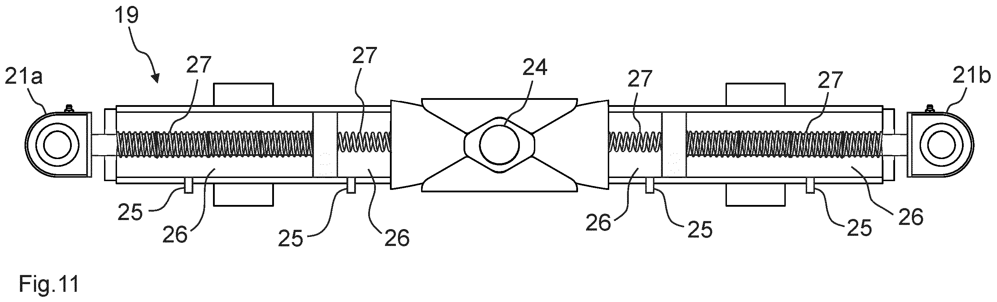

Figur 7b zeigt eine alternative Ausführungsform der Dämpfungsanordnung 19. Hier ist die Dämpfungsanordnung 19 in Form von zwei Gummipufferelementen zwischen dem Mittelteil und den Zwischenrahmen 12 a und 12 b ausgebildet. Dies stellt eine einfache und kostengünstige Variante einer Dämpfungsanordnung 19 dar. Diese Ausführungsform ist weiter unten mit Bezug auf die Figur 11 genauer beschrieben.

Alternativ ist es möglich, dass die Dämpfungsanordnung 19 zwei Hydraulikzylinder umfasst, die zwischen dem Mittelteil und den Zwischenrahmen 12 a und 12 b angeordnet sind. Damit kann, wie weiter oben beschrieben, eine aktive Dämpfung von Schwingungsbewegungen erreicht werden.

Figur 8 zeigt perspektivisch eine erste Ausführungsform einer die Dämpfungsanordnung 19. Es ist zu sehen, dass die Dämpfungsanordnung 19 zylindrisch ausgebildet ist, und an beiden Enden äußere Befestigungselemente 21 a,b umfasst. Die äußeren Befestigungselemente 21 a,b können beispielsweise mit den Zwischenrahmen 12 a,b verbunden werden. Es ist weiterhin zu sehen, dass die Dämpfungsanordnung 19 einen mittleren Gehäuseteil 22 aufweist. Der mittlere Gehäuseteil 22 ist mittig in Längsrichtung der Dämpfungsanordnung 19 angeordnet. Es ist erkennbar, dass der mittlere Gehäuseteil 22 als Hohlzylinder ausgebildet ist und eine Öffnung 23 aufweist. Die Öffnung 23 ist hier als Langloch ausgebildet. Weiterhin umfasst die Dämpfungsanordnung 19 zwei äußere Gehäuseteile 22 a,b, die sich an die äußeren Befestigungselemente 21 a,b anschließen. Der Außendurchmesser des mittleren Gehäuseteils 22 ist dabei größer als der Außendurchmesser der äußeren Gehäuseteile 22 a,b.

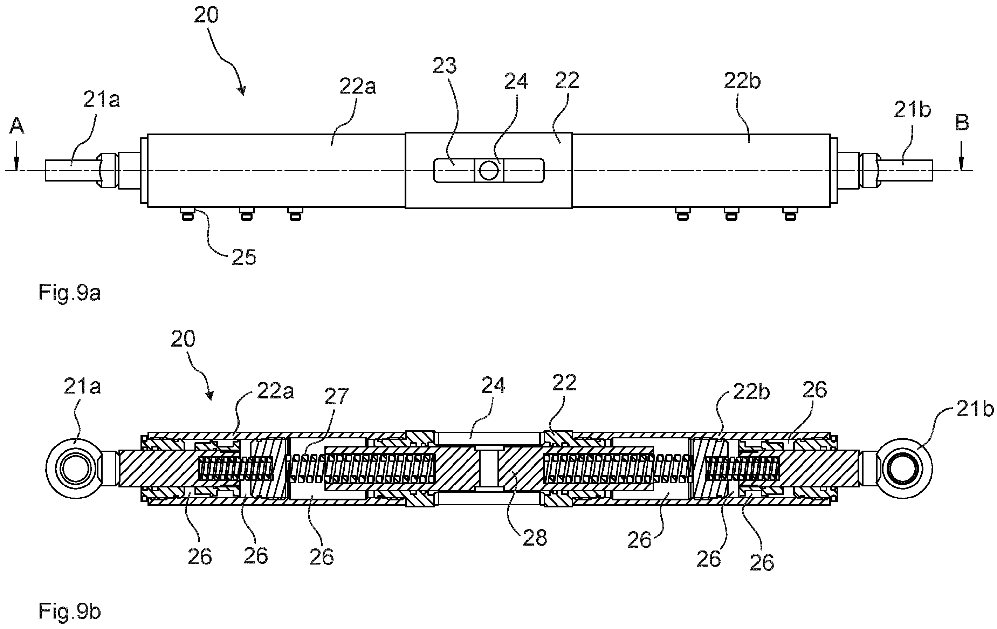

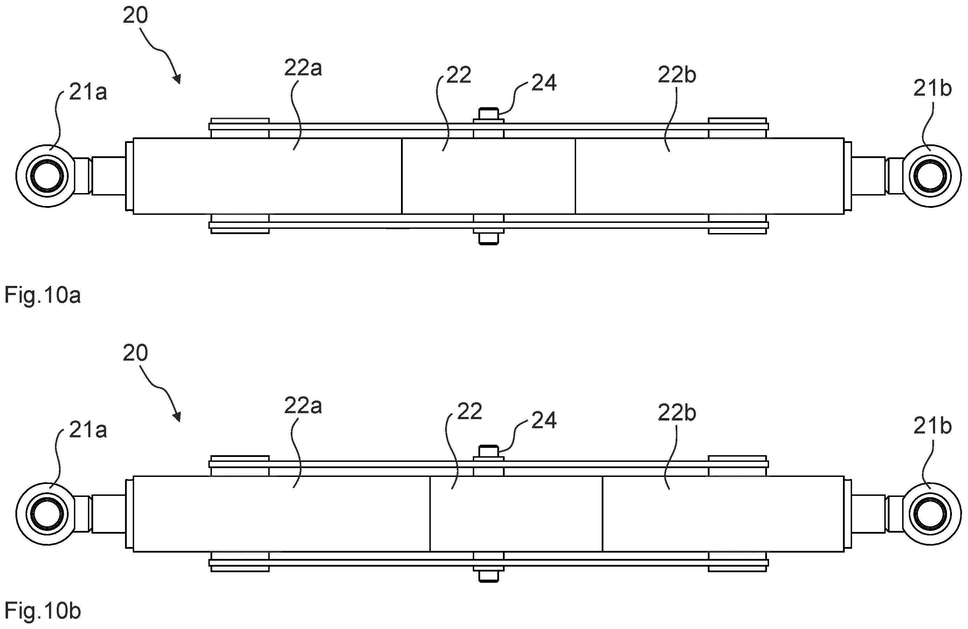

Im Inneren der Dämpfungsanordnung 19 ist ein inneres Befestigungselement 24 angeordnet. Das innere Befestigungselement 24 ist durch die Öffnung 23 in dem Gehäuseteil 22 freigelegt bzw. zugänglich. Das innere Befestigungselement 24 kann insbesondere dazu verwendet werden, das Dämpfungselement 20 an dem Verteilergestänge 10 zu befestigen. Das innere Befestigungselement 24 kann beispielsweise ein Durchgangs- oder Gewindeloch sein, wobei die Verbindung, beispielsweise zu dem Mittelteil 11, über geeignete Befestigungsmittel erfolgen kann. Figur 8 zeigt weiterhin Anschlüsse 25, die mit im Inneren die Dämpfungsanordnung 19 liegenden Hydraulikkammern 26 verbunden sind. Dabei stellen die jeweils auf einer Seite des inneren Befestigungselements 24 gelegenen Hydraulikkammern ein Dämpfungselement 20 dar. Wenn die Dämpfungsanordnung 19 mittels des inneren Befestigungselements 24 fest mit einem anderen Element verbunden ist, beispielsweise mit dem Mittelteil 11, so kann sich die Dämpfungsanordnung 19 in ihrer Längsrichtung um die Position des inneren Befestigungselements 24 verschieben. Dies wird weiter unten mit Bezug auf die Figuren 9a, 9b, 10a und 10b genauer erläutert.

In Figur 9a ist eine Draufsicht des in Figur 8 gezeigten Dämpfungsanordnung 19 zu sehen. Insbesondere sind hier die innere Befestigungseinrichtung 24 sowie die Öffnung 23 in dem mittleren Gehäuseteil 22 zu erkennen.

Figur 9b zeigt einen Schnitt der Dämpfungsanordnung 19 entlang der in Figur 9a gezeichneten Linie A - B. Der Blick auf die Dämpfungsanordnung 19 entspricht hier einem Blick in oder entgegen der Fahrtrichtung des landwirtschaftlichen Geräts 1, an dem die Dämpfungsanordnung 19 im Betrieb befestigt ist. Es ist zu sehen, dass die Dämpfungsanordnung 19 eine Vielzahl von hydraulischen Kammern 26 umfasst, wobei die jeweils auf einer Seite des Befestigungselements 24 liegenden Kammern 26 ein Dämpfungselement 20 bilden. Jede der Kammern 26 kann über einen entsprechenden Anschluss 25 mit einem Hydraulikkreislauf verbunden werden. Dabei kann jeder Kammer 26 ein hydraulisches Ventil (nicht gezeigt) zugeordnet sein, so dass der Druck in jeder hydraulischen Kammer 26 individuell eingestellt werden kann. In der gezeigten Ausführungsform ist in den vier inneren hydraulischen Kammern 26 jeweils ein mechanisches Federelement 27 angeordnet. Die mechanischen Federelemente 27 üben bei einer Kompression oder Expansion der jeweiligen hydraulischen Kammer 26 eine Rückstellkraft auf die jeweilige hydraulische Kammer 26 aus. Es versteht sich, dass die Anzahl der gezeigten hydraulischen Kammern 26 und Federelemente 27 lediglich beispielhaft ist.

Es ist weiterhin zu erkennen, dass das Befestigungselement 24 als von oben nach unten verlaufendes Durchgangsloch in der Dämpfungsanordnung 19 ausgebildet ist. Damit kann die Dämpfungsanordnung 19 beispielsweise mittels einer geeigneten Schraub- oder Steckverbindung am Mittelteil 11 befestigt werden. Figur 9b zeigt weiterhin, dass das Durchgangsloch im Inneren der Dämpfungsanordnung 19 durch einen blockartigen Teil 28 verläuft, der als Vollzylinder ausgebildet ist. Der blockartige Teil 28 ist nach außen vom den Gehäuseteilen 22, 22a und 22b umgeben, die beweglich gegenüber dem blockartigen Teil 28 gelagert sind. Mit anderen Worten können sich die Gehäuseteile 22, 22a und 22b gegenüber dem blockartigen Teil 28 in Längsrichtung der Dämpfungsanordnung 19 verschieben.

Ist nun beispielsweise das Befestigungselement 21 a mit dem Zwischenrahmen 12 a verbunden, so kann, beispielsweise durch eine Gierbewegung des Auslegers 13 a, eine Kraft in Längsrichtung auf die Dämpfungsanordnung 19 übertragen werden. Wirkt diese Kraft beispielsweise in der Figur 9b von links auf die Dämpfungsanordnung 19, so wird sie durch die mechanischen Federelemente 27 sowie die Hydraulikflüssigkeit in den Kammern 26 gedämpft. Je nach Stärke der Kraft kann eine Verschiebung des äußeren Gehäuseteils 22 a nach rechts auftreten. In diesem Fall wird durch eine formschlüssige Verbindung zwischen dem äußeren Gehäuseteilen 22 a und dem mittleren Gehäuseteil 22 letzteres ebenfalls nach rechts verschoben, und die Verschiebung wird analog auf das andere äußere Gehäuseteil 22 b übertragen. Auf der rechten Seite der Dämpfungsanordnung 19 findet eine weitere Dämpfung der Kraft über die dort angeordneten mechanischen Federelemente 27 und die hydraulischen Kammern 26 statt. Falls die Kraft nicht vollständig gedämpft wird, so wird auch das äußere Befestigungselement 21 b nach rechts verschoben, und diese Bewegung wird entsprechend auf den Zwischenrahmen 12 b und den Ausleger 13 b übertragen.

Mit anderen Worten findet so eine passiv gedämpfte Übertragung einer Gierbewegung von einem Ausleger 12 a auf den anderen Ausleger 12 b statt. Bei diesem Prozess wird aufgrund des verschiebbaren mittleren Gehäuseteils 22 keine, oder nur eine sehr geringe, Kraft auf den blockförmigen Teil 28, und damit auf das Verteilergestänge 10, übertragen.

Es ist auch möglich, die eben beschriebenen Bewegungen aktiv zu dämpfen, indem der hydraulische Druck in den Kammern 26 entsprechend reguliert wird. Beispielsweise ist es möglich, eine Gierbewegung der Ausleger 13 a,b mittels geeigneter Sensoren wie weiter oben beschrieben zu erfassen. Mittels einer Regeleinrichtung kann dann der Druck in den Kammern 26 derart eingestellt werden, dass die Gierbewegung aktiv kompensiert wird.

Figuren 10a und 10b zeigen die eben beschriebene Verschiebung der Dämpfungsanordnung 19 in seiner Längsrichtung bei einer von links wirkenden Kraft. Dabei zeigen Figuren 10a und 10b die Dämpfungsanordnung 19 von vorne, also entgegen der Fahrtrichtung des landwirtschaftlichen Geräts 1 gesehen. Figur 10a zeigt die Dämpfungsanordnung 19 in ihrem Ruhezustand. In Figur 10b ist der Zustand gezeigt, der sich aufgrund einer Kraft, die beispielsweise aufgrund einer Gierbewegung auftritt, einstellt. Es ist zu erkennen, dass sich die Position des inneren Befestigungselements 24 nicht verändert hat, während die äußeren Befestigungselemente 21 a,b, die äußeren Gehäuseteile 22 a,b und das mittlere Gehäuseteil 22 nach rechts verschoben worden sind.

Figur 11 zeigt eine alternative Ausführung einer Dämpfungsanordnung 19. Auch diese Ausführungsform umfasst äußere Befestigungselemente 21 a,b, die jeweils mit den Zwischenrahmen 12 a,b verbunden werden können. Weiterhin umfasst die Dämpfungsanordnung 19 auch ein inneres Befestigungselement 24, mittels derer die Dämpfungsanordnung 19 beispielsweise am Mittelteil 11 befestigt werden kann. Im Gegensatz zu der in den Figuren 8 bis 10 gezeigten Ausführungsform umfasst die in Figur 11 gezeigte Dämpfungsanordnung 19 zwei voneinander durch das innere Befestigungselement 24 getrennte hydraulische Dämpfungselemente 20, die nicht miteinander in Verbindung stehen.

Die Dämpfungselemente 20 sind hier als hydraulische Zylinder ausgebildet. Dabei umfasst jeder der hydraulischen Zylinder zwei hydraulische Kammern 26. Die hydraulischen Zylinder können beispielsweise als doppeltwirkende Zylinder ausgebildet sein. Die hydraulischen Kammern 26 können jeweils über entsprechenden Anschluss 25 mit einem Hydraulikkreislauf verbunden werden. Dabei kann jeder Kammer 26 ein hydraulisches Ventil (nicht gezeigt) zugeordnet sein, so dass der Druck in jeder hydraulischen Kammer 26 individuell eingestellt werden kann.

Wie weiter oben beschrieben, ist es auch bei dieser Ausführungsform möglich, Bewegungen der jeweiligen Ausleger aktiv zu dämpfen, indem der hydraulische Druck in den Kammern 26 entsprechend reguliert wird. Beispielsweise ist es möglich, eine Gierbewegung der Ausleger 13 a,b mittels geeigneter Sensoren wie weiter oben beschrieben zu erfassen. Mittels einer Regeleinrichtung kann dann der Druck in den Kammern 26 derart eingestellt werden, dass die Gierbewegung aktiv kompensiert wird. Diese Konstruktion ist aufgrund der getrennten Dämpfungselemente 20 konstruktiv einfacher und kostengünstiger als die mit Bezug auf Figuren 8 bis 10 beschriebene Ausführungsform.

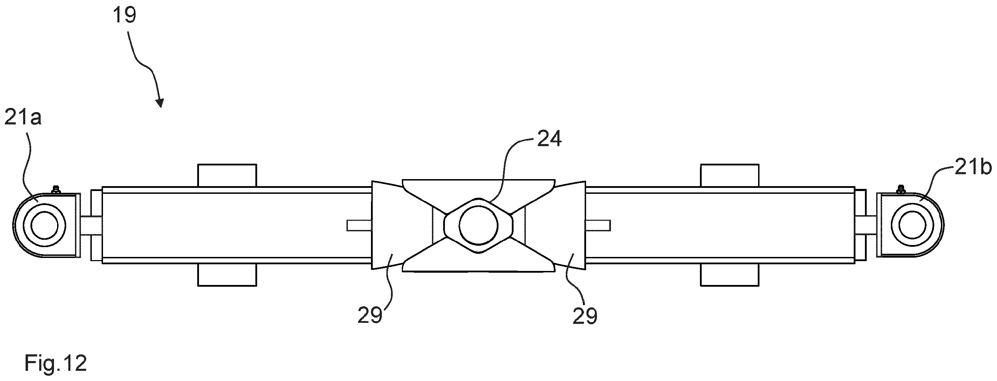

Figur 12 zeigt eine weitere alternative Ausführung einer Dämpfungsanordnung 19. Auch diese Ausführungsform umfasst äußere Befestigungselemente 21 a,b, die jeweils mit den Zwischenrahmen 12 a,b verbunden werden können. Weiterhin umfasst diese Ausführungsform der Dämpfungsanordnung 19 auch ein inneres Befestigungselement 24, mittels derer die Dämpfungsanordnung 19 beispielsweise am Mittelteil 11 befestigt werden kann. Im Gegensatz zu der in den Figuren 8 bis 11 gezeigten Ausführungsform umfasst die Dämpfungsanordnung 19 zwei Gummipuffer 29, die zwischen den äußere Befestigungselemente 21 a,b und des inneren Befestigungselements 24 angeordnet sind. Damit wird eine Dämpfung von Bewegungen und Kräften entlang der Längsachse die Dämpfungsanordnung 19 in einfacher und kostengünstiger Art und Weise erreicht.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Landwirtschaftliches Gerät (1) zum Ausbringen von Material, wie Düngemittel, Pflanzenschutzmittel oder Saatgut, umfassend
ein beidseitig klappbares Verteilergestänge (10), umfassend
einen Mittelteil (11), wobei der Mittelteil (11) drehfest mit dem landwirtschaftlichen Gerät (2) verbunden ist,
wobei der Mittelteil (11) in seinem unteren Bereich einen Querrahmen aufweist; zwei Zwischenrahmen (12 a,b), die über Gelenke mit dem Mittelteil (11) verbunden sind,
wobei die Zwischenrahmen (12 a,b) auf dem Querrahmen nach oben gerichtet angeordnet sind; wobei jeweils eine horizontale Drehachse (h1, h2) im unteren Bereich der zwei Zwischenrahmen (12 a,b) angeordnet ist;
zwei mit den jeweiligen Zwischenrahmen (12 a,b) verbundene seitliche Ausleger (13 a,b); und
eine Dämpfungsanordnung (19) zur Dämpfung von Bewegungen des ersten Auslegers (13 a) und des zweiten Auslegers (13 b) in Fahrtrichtung des landwirtschaftlichen Geräts (1),
wobei die Dämpfungsanordnung die Zwischenrahmen (12 a,b) miteinander verbindet, oder
wobei die Dämpfungsanordnung (19) die jeweiligen Zwischenrahmen (12 a,b) mit dem Mitteilteil (11) verbindet.

2. Landwirtschaftliches Gerät gemäß Anspruch 1, wobei die Dämpfungsanordnung (19) mindestens ein hydraulisches Dämpfungselement (20), insbesondere einen Hydraulikzylinder, umfasst.

3. Landwirtschaftliches Gerät gemäß Anspruch 2, wobei die Dämpfungsanordnung (19) weiterhin mindestens ein hydraulisches Ventil umfasst, welches dem mindestens einen hydraulischen Dämpfungselement (20) zugeordnet ist.

4. Landwirtschaftliches Gerät gemäß einem der vorangegangen Ansprüche, wobei die Dämpfungsanordnung (19) mindestens ein mechanisches Federelement (27, 29) umfasst.

5. Landwirtschaftliches Gerät gemäß einem der vorangegangen Ansprüche, weiterhin umfassend eine Sensoreinrichtung, die dazu konfiguriert ist, Schwingungen des Verteilergestänges (10) in horizontaler Richtung zu erfassen.

6. Landwirtschaftliches Gerät gemäß Anspruch 5, wobei die Sensoreinrichtung einen oder mehrere Drucksensoren umfasst, wobei die Drucksensoren dazu konfiguriert sind, einen Druck oder eine Druckänderung in dem hydraulischen Dämpfungselement erfassen.

7. Landwirtschaftliches Gerät gemäß Anspruch 3 und Anspruch 5 oder Anspruch 6, weiterhin umfassend eine Regeleinheit, wobei die Regeleinheit dazu konfiguriert ist,
die Werte der Sensoreinrichtung zu verarbeiten, und
das mindestens eine hydraulische Ventil basierend auf den verarbeiteten Sensorwerten anzusteuern, so dass eine erfasste Schwingung aktiv gedämpft wird.

8. Landwirtschaftliches Gerät gemäß einem der Ansprüche 2 bis 7, wobei das mindestens eine hydraulische Dämpfungselement (20) mindestens zwei hydraulische Kammern (26) umfasst, wobei jeder hydraulischen Kammer (26) ein hydraulisches Ventil zugeordnet ist.

9. Landwirtschaftliches Gerät gemäß Anspruch 8, wobei mindestens eine hydraulische Kammer (26) ein mechanisches Federelement (27) umfasst.

10. Landwirtschaftliches Gerät gemäß einem der vorangegangenen Ansprüche, wobei die Dämpfungsanordnung die Zwischenrahmen (12 a,b) unabhängig von dem Mittelteil (11) miteinander verbindet.

11. Verfahren zur Steuerung eines landwirtschaftlichen Geräts gemäß Anspruch 3 und einem der Ansprüche 6 bis 10, umfassend
Erfassen von Sensorwerten durch die Sensoreinrichtung;
Verarbeiten der Sensorwerte durch die Regeleinheit; und
Ansteuern des mindestens einen hydraulischen Ventils basierend auf den verarbeiteten Sensorwerten, so dass eine erfasste Schwingung durch das hydraulische Dämpfungselement (20) aktiv gedämpft wird.

## Claims

1. Agricultural machine (1) for spreading material such as fertilizer, plant protectant, or seed, comprising
a distributor boom (10) which is foldable on both sides, comprising
a central part (11), wherein the central part (11) is connected to the agricultural machine (2) in a rotationally fixed manner,
wherein the central part (11) has in its lower region a transverse frame;
two intermediate frames (12a, b) which are connected to the central part (11) via joints,
wherein the intermediate frames (12a, b) are arranged pointing upward on the transverse frame; wherein a horizontal rotation axis (h1, h2) is located in the lower region of each of the two intermediate frames (12a, b);
two lateral arms (13a, b) which are connected to the respective intermediate frames (12a, b); and
a damping arrangement (19) for damping movements of the first arm (13a) and the second arm (13b) in the direction of travel of the agricultural machine (1),
wherein the damping arrangement connects the intermediate frames (12a, b) to one another, or
wherein the damping arrangement (19) connects the respective intermediate frames (12a, b) to the central part (11).

2. Agricultural machine according to claim 1, wherein the damping arrangement (19) comprises at least one hydraulic damping element (20), in particular a hydraulic cylinder.

3. Agricultural machine according to claim 2, wherein the damping arrangement (19) further comprises at least one hydraulic valve which is assigned to the at least one hydraulic damping element (20).

4. Agricultural machine according to any of the preceding claims, wherein the damping arrangement (19) comprises at least one mechanical spring element (27, 29).

5. Agricultural machine according to any of the preceding claims, further comprising a sensor device which is configured to detect oscillations of the distributor boom (10) in the horizontal direction.

6. Agricultural machine according to claim 5, wherein the sensor device comprises one or more pressure sensors, wherein the pressure sensors are configured to detect a pressure or a pressure change in the hydraulic damping element.

7. Agricultural machine according to claim 3 and claim 5 or claim 6, further comprising a closed-loop control unit, wherein the closed-loop control unit is configured
to process the values from the sensor device, and
to actuate the at least one hydraulic valve on the basis of the processed sensor values such that a detected oscillation is actively damped.

8. Agricultural machine according to any of claims 2 to 7, wherein the at least one hydraulic damping element (20) comprises at least two hydraulic chambers (26), wherein each hydraulic chamber (26) is assigned a hydraulic valve.

9. Agricultural machine according to claim 8, wherein at least one hydraulic chamber (26) comprises a mechanical spring element (27).

10. Agricultural machine according to any of the preceding claims, wherein the damping arrangement connects the intermediate frames (12a, b) to one another independently of the central part (11).

11. Method for controlling an agricultural machine according to claim 3 and any of claims 6 to 10, comprising
the sensor device detecting sensor values;
the closed-loop control unit processing the sensor values; and
actuating the at least one hydraulic valve on the basis of the processed sensor values such that a detected oscillation is actively damped by the hydraulic damping element (20).

## Revendications

1. Appareil agricole (1) pour l'épandage de matériau, tel que de l'engrais, des agents phytosanitaires ou des semences, comprenant
une rampe de distribution (10) pouvant se rabattre des deux côtés, comprenant
une partie centrale (11), dans lequel la partie centrale (11) est reliée à l'appareil agricole (2) de manière solidaire en rotation,
dans lequel la partie centrale (11) présente, dans sa région inférieure, un cadre transversal ;
deux cadres intermédiaires (12 a, b) reliés à la partie centrale (11) par l'intermédiaire d'articulations ;
dans lequel les cadres intermédiaires (12 a, b) sont disposés sur le cadre transversal en étant orientés vers le haut ; dans lequel respectivement un axe de rotation horizontal (h1, h2) est disposé dans la région inférieure des deux cadres intermédiaires (12 a, b) ;
deux bras latéraux (13 a, b) reliés aux cadres intermédiaires (12 a, b) respectifs ; et
un agencement d'amortissement (19) permettant d'amortir des mouvements du premier bras (13 a) et du second bras (13 b) dans le sens de déplacement de l'appareil agricole (1),
dans lequel l'agencement d'amortissement relie entre eux les cadres intermédiaires (12 a, b), ou
dans lequel l'agencement d'amortissement (19) relie les cadres intermédiaires (12 a, b) respectifs à la partie centrale (11).

2. Appareil agricole selon la revendication 1, dans lequel l'agencement d'amortissement (19) comprend au moins un élément d'amortissement (20) hydraulique, en particulier un vérin hydraulique.

3. Appareil agricole selon la revendication 2, dans lequel l'agencement d'amortissement (19) comprend en outre au moins une vanne hydraulique associée à l'au moins un élément d'amortissement (20) hydraulique.

4. Appareil agricole selon l'une des revendications précédentes, dans lequel l'agencement d'amortissement (19) comprend au moins un élément formant ressort mécanique (27, 29).

5. Appareil agricole selon l'une des revendications précédentes, comprenant en outre un dispositif à capteurs configuré pour détecter les vibrations de la rampe de distribution (10) dans le sens horizontal.

6. Appareil agricole selon la revendication 5, dans lequel le dispositif à capteurs comprend un ou plusieurs capteurs de pression, dans lequel les capteurs de pression sont configurés pour détecter une pression ou une variation de pression dans l'élément d'amortissement hydraulique.

7. Appareil agricole selon la revendication 3 et la revendication 5 ou la revendication 6, comprenant en outre une unité de régulation, dans lequel l'unité de régulation est configurée pour
traiter les données du dispositif à capteurs, et
commander l'au moins une vanne hydraulique en fonction des valeurs de capteurs traitées, de sorte qu'une vibration détectée est activement amortie.

8. Appareil agricole selon l'une des revendications 2 à 7, dans lequel l'au moins un élément d'amortissement (20) hydraulique comprend au moins deux chambres hydrauliques (26), dans lequel une vanne hydraulique est associée à chaque chambre hydraulique (26).

9. Appareil agricole selon la revendication 8, dans lequel au moins une chambre hydraulique (26) comprend un élément formant ressort mécanique (27).

10. Appareil agricole selon l'une des revendications précédentes, dans lequel l'agencement d'amortissement relie les cadres intermédiaires (12 a, b) entre eux indépendamment de la partie centrale (11).

11. Procédé pour la commande d'un appareil agricole selon la revendication 3 et l'une des revendications 6 à 10, comprenant
la détection de valeurs de capteurs par le dispositif à capteurs ;
le traitement des valeurs des capteurs par l'unité de régulation ; et
la commande de l'au moins une vanne hydraulique en fonction des valeurs de capteurs traitées, de sorte qu'une vibration détectée est activement amortie par l'élément d'amortissement (20) hydraulique.
